# EUROPEAN PATENT SPECIFICATION

(11) **EP 2 815 225 B1**
(45) Date of publication and mention of the grant of the patent: **20.11.2019**
(21) Application number: 13713238.7
(22) Date of filing: 08.02.2013
(51) Int. Cl.: G01N 3/34

(54) **DISPLACEMENT-IMPOSED FATIGUE TEST BENCH FOR A MANUFACTURED ITEM**
AUF VERLAGERUNG BERUHENDER DAUERPRÜFSTAND FÜR EIN ERZEUGNIS
BANC D'ESSAI DE FATIGUE IMPOSÉE PAR DÉPLACEMENT POUR UN ARTICLE MANUFACTURÉ

(30) Priority: 13.02.2012 IT BS20120019
(43) Date of publication of application: 24.12.2014
(73) Proprietor: Metra S.p.A., 25050 Rodengo Saiano (Brescia) (IT); 2 Effe Engineering S.r.l., 25080 Soiano del Lago (Brescia) (IT)
(72) Inventor: MARCONI, Gian Paolo, I-25083 Gardone Riviera (Brescia) (IT); CARRETTA, Ernesto Mario, I-85024 Lavello (Potenza) (IT)
(74) Representative: Pulieri, Gianluca Antonio
(86) International application number: PCT/IB2013/051067
(87) International publication number: WO 2013/121333

(56) References cited:
- EP-A1- 0 603 029
- JP-A- 9 189 652
- JP-A- 2001 289 762
- JP-A- 2006 258 454
- US-A1- 2007 256 503

## Description

### Sphere of application

The present invention relates to a fatigue test bench for manufactured items, in particular made from metallic material and specifically from aluminium.

### State of the art

It is known that the fatigue design of manufactured item is as important as it is difficult, on account of the fact that the fatigue breakpoint phenomenon manifests itself in actual fact depending on the material which the manufactured item is made from, on the geometry of such manufactured item, on the stress characteristics it is subjected to, and on innumerable other factors.

A number of studies exist which have highlighted the characteristics of the fatigue breakpoint and proposed different design methods. However, almost all such studies take into consideration the behaviour of a specific sample and then propose a design method based on the assumption of extending the observed behaviour to a real manufactured item.

Such situation leads to a situation of uncertainty of the fatigue design which translates into the need to use elevated safety factors, which translates into a waste of material and non-optimal geometries of the manufactured item.

Document JP2006258454 discloses a fatigue test bench for a honeycomb-structure panel comprising a characterisation device and pressure elements in the form of fulcrums.

### Purpose of the invention

The purpose of the present invention is to make a fatigue test bench suitable for conducting experimental tests on manufactured items, in particular made from metallic material and specifically from aluminium.

Such purpose is achieved by a fatigue test bench made according to claim 1.

### Brief description of the drawings

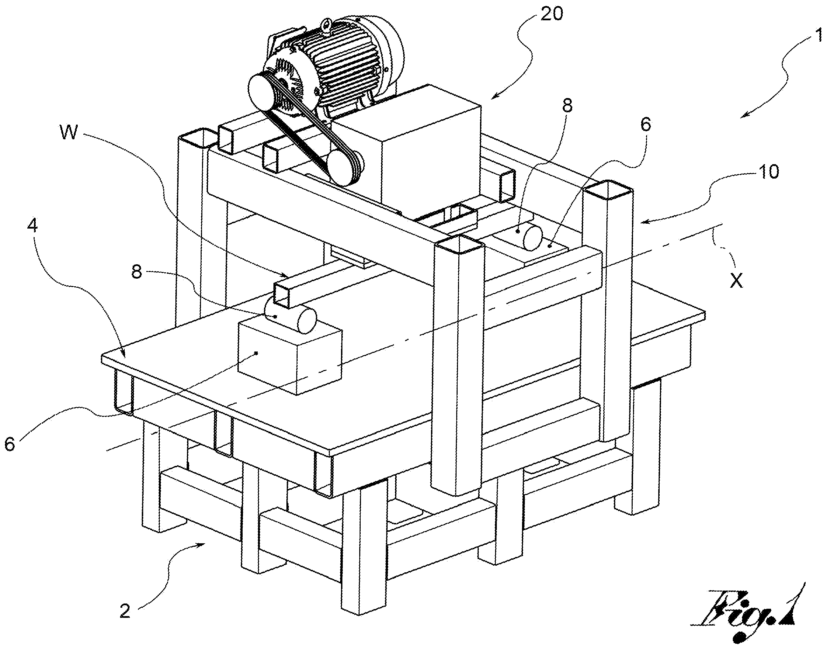

Figure 1 shows a fatigue test bench according to the present invention, according to one embodiment.

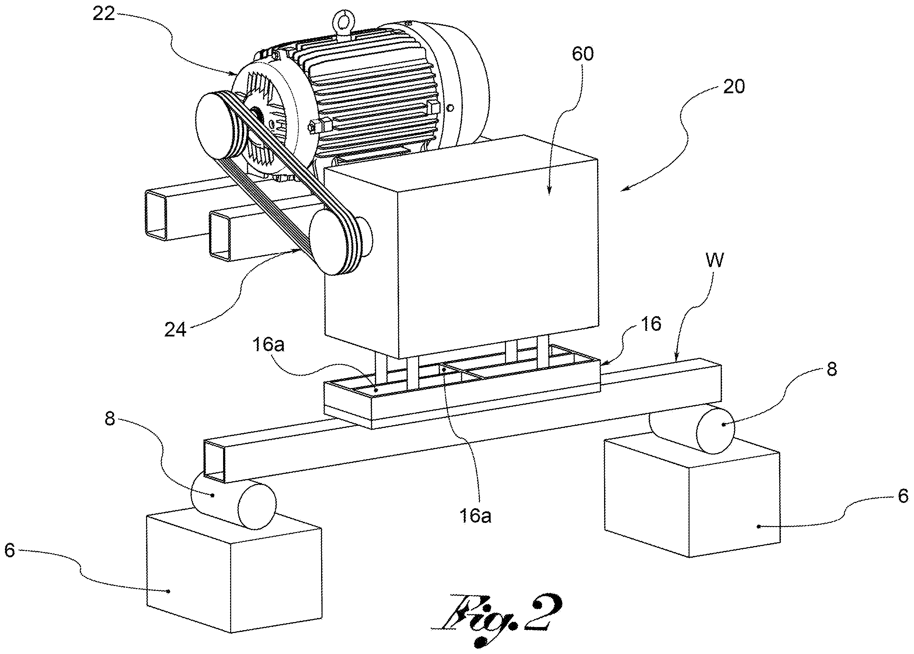

Figure 2 shows a drive group of the bench in figure 1.

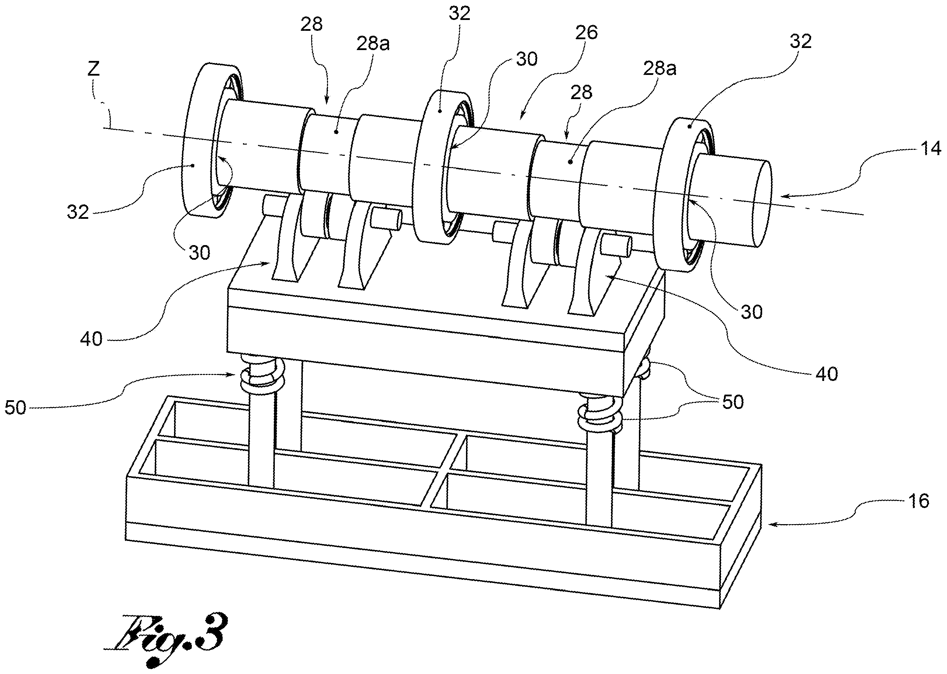

Figure 3 shows a characterisation device of the drive group in figure 2.
Figures 4 and 5 show an example of application of strain gauges.
Figure 6 shows a fatigue test bench according to the present invention, according to a further embodiment.
Figure 7 shows a detail of the bench in figure 6.

### Description of an embodiment

With reference to the appended drawings, reference numeral 1 globally denotes a fatigue test bench for manufactured items, in particular for manufactured items made from metallic material, specifically from aluminium and the alloys thereof.

The bench 1 comprises a base 2 preferably made from a frame composed of girders, preferably welded to each other, to assure a high degree of rigidity.

The bench 1 further comprises a table 4 for the support of the manufactured item to be tested, having its main extension along a table axis X.

The bench 1 is further provided with means of constraint for the constraint and attachment if necessary of the manufactured item to the table. For example, the means of constraint comprise a pair of blocks 6, for example distanced along the table axis 4, and respective cylinders 8, supported by the blocks 6, which the manufactured item W may be rested on.

The configuration and the structure of the means of constraint varies according to the type of stress which the manufactured item is to be subjected to. For example, the means of constraint formed by the two blocks 6 and the two cylinders 8 simulate a "joint" type constraint for the manufactured item.

The bench 1 comprises in addition a frame 10 which surmounts the table 4 and is supported at the two sides of the table by the base 2.

Preferably, the frame 10 is also composed of a structure formed of girders, for example welded to each other.

In addition, the bench 1 comprises a drive group 20, at least partially supported by the frame 10, suitable for impressing upon the manufactured item W a variable stress over time by means of an imposed displacement.

The drive group 20 comprises drive means, for example comprising an electric motor 22, for example supported by the frame 10.

The group 20 further comprises a characterisation device 14, connected to the drive means, for example by means of a belt connection 24, and a pressure element 16, connected to the characterisation device, suitable for coming into contact with the manufactured item W to impose a deformation on it.

The pressure element 16 is a plate, preferably reinforced and stiffened by ribs 16a, having a main extension along the table axis X, that is in the direction of extension of the manufactured item.

Advantageously, such pressure element permits a distribution of the action on the manufactured item, so as to prevent concentrated actions which could lead to scoring of the manufactured item.

The characterisation device 14 comprises a shaft 26 rotating by virtue of its connection to the drive means around a rotation axis Z fitted with at least one cam element 28, provided with an outer eccentric surface 28a, which operates the pressure element 16 impressing a vertical oscillation on it.

According to a preferred embodiment, at least two cam elements 28 are provided, distanced along the rotation axis Z of the shaft.

Preferably, the cam element 28 is made in one piece with the remaining part of the shaft 26.

The shaft 26 also has support surfaces 30 and the device 14 comprises at least one bearing 32 for the support in rotation of the shaft, positioned at the support surfaces 30.

Preferably, the outer surfaces 28a of said cam elements 28 are lowered in relation to the support surfaces 30 of the bearings.

This makes it possible, in a preferred embodiment, to position a bearing 32 in an intermediate position between two cam elements 28, increasing the rigidity of the support of the shaft.

The characterization device 14 further comprises transmission elements 40, firmly connected to the pressure element 16, each engaged and moved in oscillation by the relative cam element 28.

Preferably, said transmission elements 40 comprise rollers in contact with the respective cam elements, to improve the contact conditions with said cam elements.

According to a preferred embodiment, the characterisation device 14 is modifiable or replaceable to vary the characteristics of the deformation imposed on the manufactured item.

For example, a first shaft 26 is replaceable with a different shaft having differently shaped cam elements, so as to vary the characteristics of the displacement imposed on the pressure element and thus the characteristics of the deformation imposed on the manufactured item.

According to a further example, the cam elements are replaceable.

According to yet a further variant, the transmission elements present cam-shaped contact surfaces with the shaft and are replaceable.

Moreover, the drive group 20 comprises return means, such as spiral springs 50 suitable for permanently pressing the pressure plate to ensure contact with the shaft 26.

The drive group 20 further comprises a box 60, inside which the characterisation device 14 is housed, made so as to be oil or liquid proof.

Preferably, in fact, the characterisation device is in a bath of oil or of a coolant liquid, for adequate heat dissipation.

Preferably, moreover, the bench 1 comprises recirculation means operatively connected to the box 60 for the recirculation and the conditioning of the oil or of the coolant liquid.

According to a preferred embodiment, the bench 1 further comprises a derivation accessory, connectable to the pressure element, for the transformation of the vertical oscillatory movement of the same into a different desired movement (such as a horizontal oscillatory movement or circular oscillatory movement) or to apply the action to the manufactured item in a particular point in space, for example to adapt to the geometry of the manufactured item

According to a further embodiment, the bench 1 comprises a plurality of strain gauges, connectable to the manufactured product to detect the real deformation and stress, and a data management device, connected to said strain gauges, for the visualisation and management of the experimental data acquired.

In particular, the purpose of the strain gauges is to verify the real stress to which the manufactured item is subjected during the fatigue test. Moreover, the use of strain gauges, located in the areas subject to scoring or changes in cross-section, makes it possible to detect the real coefficient of overstress induced by the geometrical discontinuity.

In one variant, the strain gauges are connected to the structure of the fatigue test bench 1, for example positioned on the columns of the frame 10 or base 2.

In a further variant, accelerometers are provided to measure the vibrations acting on the manufactured item W or on the fatigue test bench 1.

### Examples of experimental tests

A) In a first experimental test, the manufactured item consisted of a tubular extrudate in aluminium alloy of square cross-section having a side = 150 mm, thickness= 5 mm, length between the supports = 2000 mm, loaded at the centreline with load surface = 500 mm, supported at the two ends with joints and resulting load = 30000 N.

The manufactured item was tested with 12 Hz frequency up to 5*10^6 cycles Operating without stop times, the test lasts about 5 days.

B) In a further experimental test, the manufactured item is composed of a riveted joint between two sheets in aluminium alloy with thickness = 3 mm, blind rivets having a diameter of = 4.8 mm. One of the two ends of the joint is held in a vice and blocked to the bench, the other is subjected to pulling at the free end equal to the load needed to cause a displacement in said point of application of the action (arrow) equal to =1 mm. The displacement is imposed by a derivation accessory connected to the pressure plate for the simulation of the desired displacement.

At an imposed frequency of 15 Hz, the test continues until failure of one of the connection elements (rivet or flap of sheet), reaching a duration limited to several days.

### Example of application of strain gauges

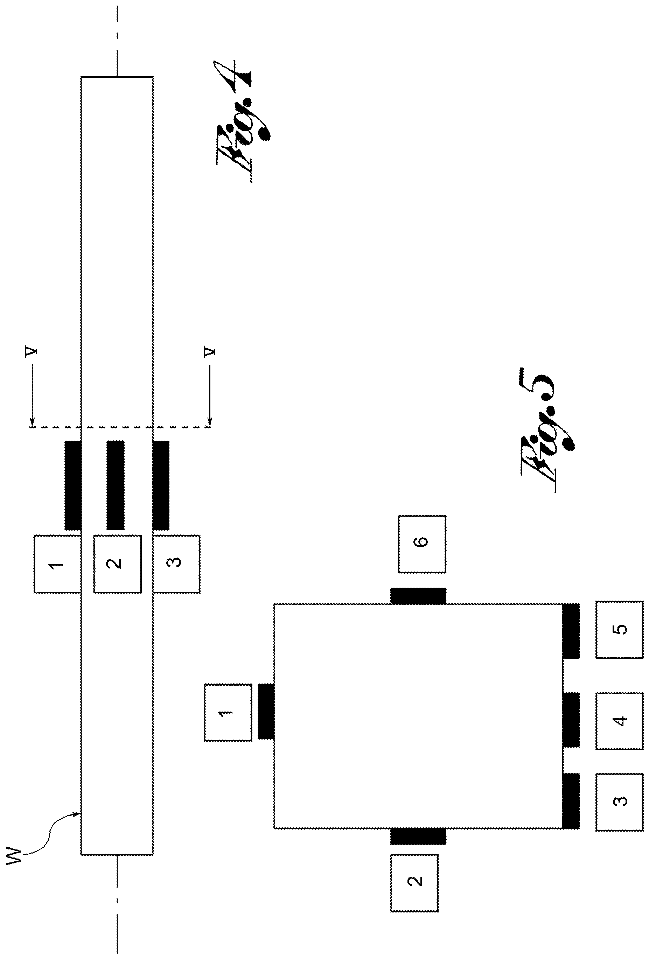

One example of application of strain gauges is shown in Figures 4 and 5.

In the case shown, the manufactured item is a prismatic extrudate, resting on two jointed supports, loaded on the centreline with an extensive load surface.

The strain gauges 1 and 4, permit the detection of the maximum value of flexural stress (both of compression and of traction) and any asymmetries in the distribution of the stresses.

The strain gauges 2 and 6, placed on the neutral axis of the cross-section, permit assessment of any axial loads due to load or constraint imprecision (and permit, together with the values supplied by the strain gauges 1 and 4, an assessment of any stress asymmetries).

The strain gauges 3 and 5 permit assessment of any "corner stress" and the calculation of the consequent overstress coefficient, for example to determine the best connection radius between the edges as regards fatigue.

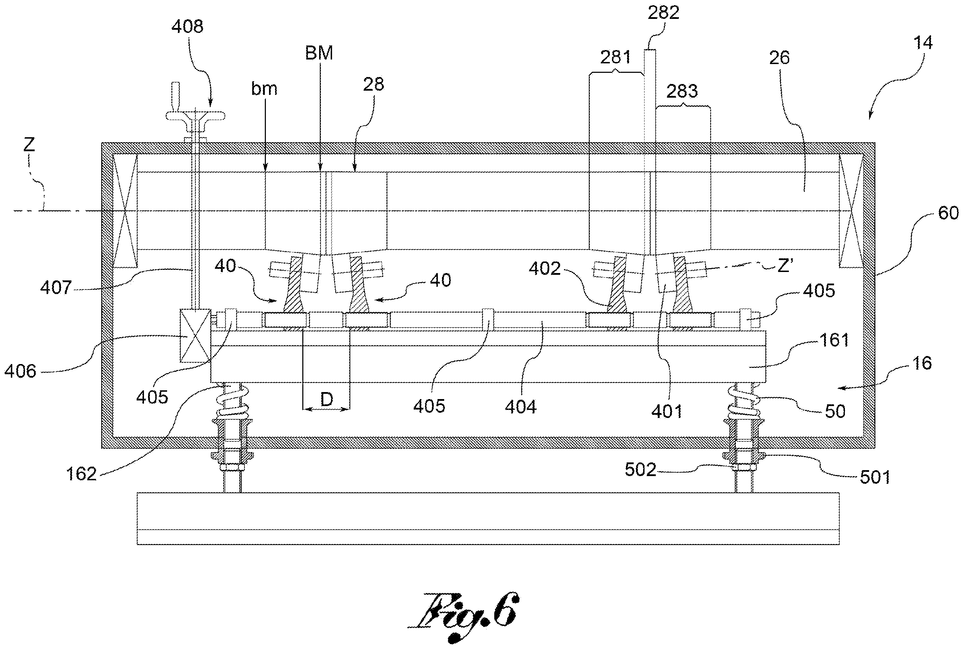

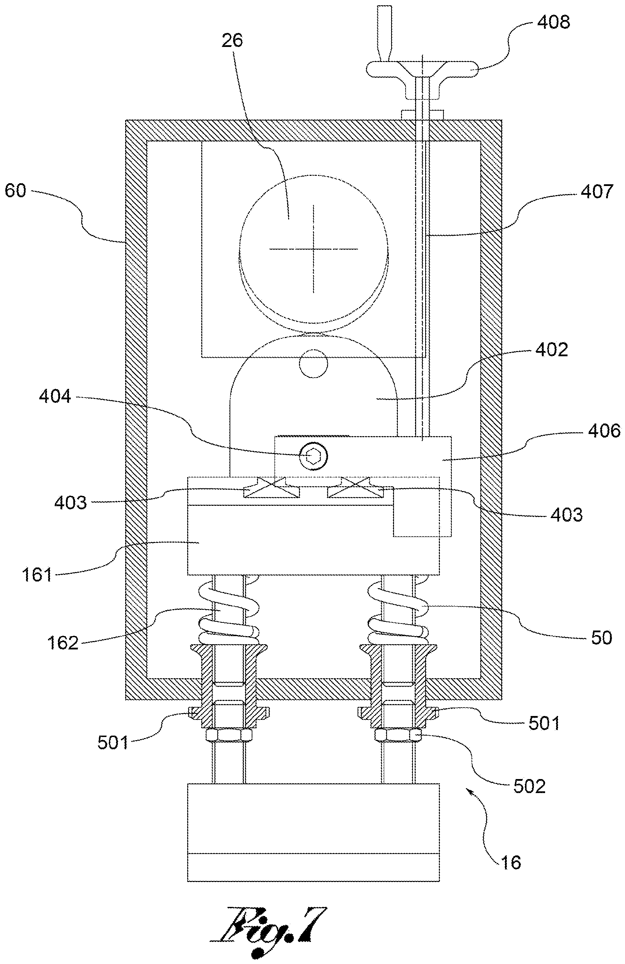

According to an embodiment variant, shown in figures 6 and 7, the characterisation device 14 comprises a shaft 26 rotating around the rotation axis Z, fitted with at least one cam element 28 of a truncated cone shape, even with non-circular bases.

The cam element 28 is provided with a smaller base bm and a larger base BM which respectively represent the minimum and maximum cam lift profile able to ensure contact with the transmission elements 40. In one embodiment, the minimum cam lift profile is equal to 1 mm and the maximum cam lift profile is equal to 10 mm.

As shown in figure 6, each cam element 28 has a truncated cone shape defined, along the rotation axis Z, by:
- a first truncated-cone cross-section 281, defined between the first minimum lift profile and the first maximum lift profile;
- a possible cylindrical intermediate cross-section 282, defined between the first maximum lift profile and the second maximum lift profile;
- a second truncated-cone cross-section 283, defined between the second maximum lift profile and the second minimum lift profile.

According to a preferred embodiment, at least two cam elements 28 of a truncated-cone shape are provided, distanced along the rotation axis Z of the shaft.

As shown in figure 6, the characterisation device 14 comprises, for each cam element 28, a pair of transmission elements 40, firmly connected to the pressure element 16.

Each transmission element 40 is translatable in the direction of the rotation axis Z, along the truncated cone profile of the cam element 28. In particular, a first transmission element 40 translatable along the profile of the first truncated cone cross-section 281, and a second transmission element 40 translatable along the profile of the second truncated cone cross-section 283 are provided. Preferably, the first and the second transmission elements translate in opposite directions.

Each transmission element 40 is therefore translatable between the first minimum lift profile and the maximum lift profile of each truncated cone cross-section. Such translation permits a precise adjustment of the displacement assigned to the pressure element 16 by acting on the position of the transmission elements 40.

The characterisation device 14 is thus adjustable to vary the characteristics of the deformation imposed on the manufactured item W by means of the translation of the transmission element 40 along the truncated cone profile of the cam element 28'. This way, it is possible to vary the characteristics of the displacement imposed on the pressure element 16 without having to replace the shaft 26 with a different shaft having differently shaped cam elements.

The transmission elements 40 comprise rollers 401 in contact with the respective cam elements 28. To improve the contact conditions between the transmission element 40, and in particular the roller 401, and the truncated cone profile of the cam element 28, the rotation axis Z' of the rollers 401 is inclined in relation to the rotation axis Z of the shaft 26.

In the embodiment shown in figure 6, the characterisation device 14 comprises for each truncated cone cam element 28, a pair of transmission elements 40 in the form of rollers 401 with rotation axes Z' inclined in relation to the rotation axis Z, according to the inclination of the respective truncated cone cross-section 281, 283. The presence of rollers 401 with inclined rotation axis Z' ensures contact between the cam element 28 and the transmission element 40, gradually as the latter is moved by translation in the direction of the rotation axis Z of the shaft 26 to perform an adjustment of the characterisation device 14.

The translation of the transmission elements 40 during the adjustment of the displacement imposed on the manufactured item W for the relative test, takes place thanks to the mounting of said transmission elements 40 on special supports 402 connected to guides 403 positioned in the direction Z. In particular, each support 402 slides along two linear, substantially parallel guides 403.

The translation of the transmission elements 40 along the guides 403 is performed by means of a control system comprising:
- a control shaft 404; the rotation of which determines a displacement of the supports 402 along the guides 403;
- a vertical shaft 407, fitted with a control handwheel 408;
- a transmission mechanism 406, comprising toothed wheels for the transmission of movement between the vertical shaft 407 and the control shaft 404.

In particular, the control shaft 404 is provided with a mated threading (right hand and left-hand) for each pair of transmission elements 40. Each support 402 is coupled to the control shaft 403 by means of a threaded hole (lead screw) according to criteria typical of control screws. The rotation of the control shaft 404 permits each pair of supports 402 to reduce or increase the distance D between the transmission elements 40 so as to ensure the contact of the rollers 401 with the cam element 28 (and in particular with the respective truncated cone cross-section 281, 283) for each value chosen in the range comprised between the minimal lift profile and the maximum lift profile.

The control shaft 404 is supported at the ends and in the centreline by supports 405 and is blocked in position by attachment elements, such as for example blocking rings , connected to said supports 405.

The rotation of the control shaft 404 is controlled from outside the box using the handwheel 408, engaged on the vertical shaft 407 integral with the transmission mechanism 406. Such transmission mechanism 406, attached (for example by screws or welded,) to the upper plate 161 of the pressure element 16, comprises conical toothed wheels for the transmission of the movement between axes orthogonal to each other. The connection between these two shafts is made for example by means of a spanner screw type connection with recessed head upstream of the first support 405 at the end of the control shaft.

The drive group 20 comprises return means, such as spiral springs 50 mounted for example along the columns 162 of the pressure element 16, suitable for permanently pressing the pressure plate to ensure contact with the shaft 26.

The pressure element 16 can thus translate vertically between the first minimum lift profile and the maximum lift profile of the truncated cone cam element 28, thus permitting the adjustment of the displacement imposed on the manufactured item W depending on the test in question. The possible vertical displacement of the pressure element 16 makes it necessary to correctly equilibrate the sum of the forces, (in particular the elastic reaction provided by the sample W subject to the imposed displacement, the forces of inertia of the oscillating masses, the elastic reaction provided by the spiral spring 50 at any moment of functioning, to ensure continuity of contact between the cam elements 28 and the respective rollers 401.

To ensure such continuity of contact, the preloading of the spiral springs 50 is acted on. The pressure element 16 is then fitted with internally threaded sleeves 501, fitted along the columns 162, also threaded, of the pressure element 16. Each sleeve 501 can translate vertically along the columns 162 by screwing, by means of a connection typical of a ring nut The sleeve 501 is then fixed in the desired position by means of an attachment counter-nut 502. The variation of the preloading of the spiral spring 50 is then obtained by the vertical shifting of the sleeves 501, on the upper rim of which a lower end of said spring rests.

Graduated indexes are provided so as to facilitate the measurement of the imposed displacement on the sample W tested and the preloading assigned to the spiral spring 50, preferably combined with cursors, positioned on the box 60.

To improve the adjustment of the characterisation device 14, the following are also provided:
- position sensors, to measure the location of the supports 402 in relation to the cam elements 28, or the effective preloading of each of the spiral springs 50;
- force sensors, for the compensation by means of the automatic control unit or manually, of any errors or discrepancies compared to the ideal situation.

Innovatively, the fatigue test bench according to the present invention, makes it possible to perform experimental fatigue tests on real manufactured items, in a reasonable time and simulating real load conditions.

In particular, advantageously, the test bench makes it possible to modify the characteristics of the imposed displacement on the manufactured item according to the test to be performed or, for example, to simulate the real working conditions of the manufactured item.

According to a further advantageous aspect, the test bench permits a considerable reduction of test times, even for tests performed for very high numbers of cycles, to the order of millions of cycles.

According to a further advantageous aspect, the characterization device is adjustable to vary the characteristics of the deformation by means of the translation of the transmission element along the truncated cone profile of the cam element.

According to a further advantageous aspect, the characterisation device is adjustable without the need to replace the shaft.

According to a further advantageous aspect, the fatigue test bench proves more versatile and free of the need to build new shafts fitted with cam elements the profiles of which reproduce the different displacement, speed and acceleration values to impose at the physical point of the sample W tested each time
According to a further advantageous aspect, the fatigue test bench permits a reduction of the costs and times for making new parts.

It is clear that a person skilled in the art may make modifications to the bench described above so as to satisfy contingent requirements, while remaining within the scope of protection as defined by the following claims.

## Claims

1. Displacement-imposed fatigue test bench (1) for a manufactured item (W) made from metallic material, comprising:
- a base (2);
- a table (4) supported by the base (2), having its main extension along a table axis (X), for the support of the manufactured item (W);
- means of constraint (6,8) for the constraint of the manufactured item (W) to the table (4), along the table axis (X), according to a predefined constraint simulation;
- a drive group (20) comprising:
a) drive means;
b) a characterisation device (14), moved by the drive means;
c) a pressure element (16), moved by the characterization device (14) and suitable for coming into contact with the manufactured item (W) to impose a deformation on it; **characterised in that** the characterization device (14) comprises a shaft (26) fitted with at least one cam element (28) which operates the pressure element (16) impressing a vertical oscillation on it,
and **in that** the pressure element (16) is a plate having a main extension along the table axis (X).

2. Bench according to claim 1, wherein the cam element (28) is provided with an outer eccentric surface (28a) and the cam element (28) is made in one piece with the remaining part of the shaft (26).

3. Bench according to any of the previous claims, wherein at least two cam elements (28) are provided, distanced along the rotation axis (Z) of the shaft (26).

4. Bench according to any of the previous claims, comprising transmission elements (40), firmly connected to the pressure element (16) each engaged and moved in oscillation by the relative cam element (28), wherein said transmission elements (40) comprise rollers in contact with the respective cam elements (28).

5. Bench according to any of the previous claims, wherein the shaft (26) has support surfaces (30) for bearings (32) and the outer surfaces (28a) of said cam elements (28) are lowered in relation to the support surfaces (30) of the bearings (32).

6. Bench according to any of the previous claims, wherein the cam elements (28) are replaceable.

7. Bench according to any of the claims from 1 to 4, wherein the cam element (28) is a truncated cone shape, even with non-circular bases.

8. Bench according to claim 7 when dependent on claim 4, wherein each transmission element (40) is translatable in the direction of the rotation axis (Z), along the truncated cone profile of the cam element (28).

9. Bench according to claim 7 or 8, wherein the truncated cone shape is defined, along the rotation axis (Z) of the shaft (26), by:
- a first truncated-cone cross-section (281), defined between the first minimum lift profile and a first maximum lift profile;
- a second truncated-cone cross-section (283), defined between a second maximum lift profile and a second minimum lift profile.

10. Bench according to claim 9, comprising a first transmission element (40) translatable along the profile of the first truncated cone cross-section (281), and a second transmission element (40) translatable along the profile of the second truncated cone cross-section (283).

11. Bench according to any of the claims from 8 to 10, wherein each transmission element (40) is a roller (401) having a rotation axis (Z') inclined in relation to the rotation axis (Z) of the shaft (26).

12. Bench according to any of the claims from 8 to 11, wherein each transmission element (40) is mounted on a support (402) connected to guides (403) positioned in the direction of the axis (Z), and wherein the translation of the transmission elements (40) is performed by means of a control system comprising.
- a control shaft (404), the rotation of which determines a displacement of the supports (402) along the guides (403) ;
- a vertical shaft (407), fitted with a control handwheel (408) ;
- a transmission mechanism (406), comprising toothed wheels for the transmission of movement between the vertical shaft (407) and the control shaft (404).

13. Bench according to any of the claims from 7 to 12, wherein the drive group (20) comprises preloaded spiral springs (50) joined to the pressure element (16) to ensure contact between the transmission elements (40) and the respective cam element (28).

14. Bench according to any of the claims from 1 to 6, wherein the characterisation device (14) is replaceable to vary the characteristics of the deformation imposed on the manufactured item (W).

15. Bench according to any of the claims from 8 to 13, wherein the characterisation device (14) is adjustable to vary the characteristics of the deformation imposed on the manufactured item (W) by means of the translation of the transmission element (40) along the truncated cone profile of the cam element (28').

## Patentansprüche

1. Prüfstand (1) für verformungsbedingte Materialermüdung für ein aus metallischem Werkstoff hergestelltes Bauteil (W), umfassend:
- eine Basis (2);
- einen Tisch (4), der von der Basis (2) getragen wird und dessen Hauptausdehnung entlang einer Tischachse (X) aufweist, zum Tragen des hergestellten Gegenstandes (W);
- Haltemittel (6, 8) für das Halten des hergestellten Gegenstands (W) auf dem Tisch (4) entlang der Tischachse (X) gemäß einer vordefinierten Halterungssimulation;
- eine Antriebsgruppe (20), umfassend:
a) Antriebsmittel;
b) eine Charakterisierungsvorrichtung (14), die durch die Antriebsmittel bewegt wird;
c) ein Druckelement (16), das von der Charakterisierungsvorrichtung (14) bewegt wird und geeignet ist, mit dem hergestellten Gegenstand (W) in Kontakt zu kommen, um ihm eine Verformung aufzuprägen; **dadurch gekennzeichnet, dass** die Charakterisierungsvorrichtung (14) eine Welle (26) umfasst, die mit mindestens einem Nockenelement (28) versehen ist, das das Druckelement (16) betätigt, das ihm eine vertikale Schwingung auferlegt, und
dass das Druckelement (16) eine Platte mit einer Hauptausdehnung entlang der Tischachse (X) ist.

2. Prüfstand nach Anspruch 1, wobei das Nockenelement (28) mit einer äußeren exzentrischen Oberfläche (28a) versehen ist und das Nockenelement (28) mit dem verbleibenden Teil der Welle (26) einteilig ausgeführt ist.

3. Prüfstand nach einem der vorhergehenden Ansprüche, wobei mindestens zwei Nockenelemente (28) vorgesehen sind, die entlang der Drehachse (Z) der Welle (26) beabstandet zueinander sind.

4. Prüfstand nach einem der vorhergehenden Ansprüche, umfassend Übertragungselemente (40), die fest mit dem Druckelement (16) verbunden sind, die jeweils durch das jeweilige Nockenelement (28) beaufschlagt und in Schwingung versetzt werden, wobei die Übertragungselemente (40) Rollen umfassen, die mit den jeweiligen Nockenelementen (28) in Kontakt stehen.

5. Prüfstand nach einem der vorhergehenden Ansprüche, wobei die Welle (26) Stützflächen (30) für Lager (32) aufweist und die Außenflächen (28a) der Nockenelemente (28) in Bezug auf die Stützflächen (30) der Lager (32) abgesenkt sind.

6. Prüfstand nach einem der vorhergehenden Ansprüche, wobei die Nockenelemente (28) austauschbar sind.

7. Prüfstand nach einem der Ansprüche von 1 bis 4, wobei das Nockenelement (28) eine Kegelstumpfform aufweist, auch mit nicht kreisförmigen Grundflächen.

8. Prüfstand nach Anspruch 7 in Abhängigkeit von Anspruch 4, wobei jedes Übertragungselement (40) in Richtung der Drehachse (Z) entlang des Kegelstumpfprofils des Nockenelements (28) verschiebbar ist.

9. Prüfstand nach Anspruch 7 oder 8, wobei die Kegelstumpfform entlang der Drehachse (Z) der Welle (26) definiert ist durch:
- einen ersten Kegelstumpfquerschnitt (281), der zwischen dem ersten minimalen Hubprofil und einem ersten maximalen Hubprofil definiert ist;
- einen zweiten Kegelstumpfquerschnitt (283), der zwischen einem zweiten maximalen Hubprofil und einem zweiten minimalen Hubprofil definiert ist.

10. Prüfstand nach Anspruch 9, umfassend ein erstes Übertragungselement (40), das entlang des Profils des ersten kegelstumpfförmigen Querschnitts (281) verschiebbar ist, und ein zweites Übertragungselement (40), das entlang des Profils des zweiten kegelstumpfförmigen Querschnitts (283) verschiebbar ist.

11. Prüfstand nach einem der Ansprüche von 8 bis 10, wobei jedes Übertragungselement (40) eine Rolle (401) mit einer Drehachse (Z') ist, die in Bezug auf die Drehachse (Z) der Welle (26) geneigt ist.

12. Prüfstand nach einem der Ansprüche von 8 bis 11, wobei jedes Übertragungselement (40) auf einem Träger (402) montiert ist, der mit Führungen (403) verbunden ist, die in Richtung der Achse (Z) positioniert sind, und wobei die Translation der Übertragungselemente (40) mittels eines Steuersystems durchgeführt wird, umfassend:
- eine Steuerwelle (404), deren Drehung eine Verschiebung der Halterungen (402) entlang der Führungen (403) bestimmt;
- eine vertikale Welle (407), die mit einem Steuerhandrad (408) ausgestattet ist;
- einen Übertragungsmechanismus (406), der Zahnräder zur Übertragung der Bewegung zwischen der vertikalen Welle (407) und der Steuerwelle (404) umfasst.

13. Prüfstand nach einem der Ansprüche von 7 bis 12, wobei die Antriebsgruppe (20) vorgespannte Schraubenfedern (50) umfasst, die mit dem Druckelement (16) verbunden sind, um den Kontakt zwischen den Übertragungselementen (40) und dem jeweiligen Nockenelement (28) sicherzustellen.

14. Prüfstand nach einem der Ansprüche von 1 bis 6, wobei die Charakterisierungsvorrichtung (14) austauschbar ist, um die Eigenschaften der dem hergestellten Gegenstand (W) auferlegten Verformung zu variieren.

15. Prüfstand nach einem der Ansprüche von 8 bis 13, wobei die Charakterisierungsvorrichtung (14) einstellbar ist, um die Eigenschaften der dem hergestellten Gegenstand (W) auferlegten Verformung durch die Translation des Übertragungselements (40) entlang des Kegelstumpfprofils des Nockenelements (28') zu verändern.

## Revendications

1. Banc d'essai de fatigue imposée par déplacement (1) pour un article manufacturé (W) constitué de matériau métallique, comprenant :
- une base (2) ;
- une table (4) supportée par la base (2), ayant son extension principale le long d'un axe de table (X), pour le support de l'article manufacturé (W) ;
- des moyens de contrainte (6, 8) pour la contrainte de l'article manufacturé (W) sur la table (4), le long de l'axe de table (X), selon une simulation de contrainte prédéfinie ;
- un groupe d'entraînement (20) comprenant :
a) des moyens d'entraînement ;
b) un dispositif de caractérisation (14), déplacé par les moyens d'entraînement ;
c) un élément de pression (16), déplacé par le dispositif de caractérisation (14) et adapté pour venir en contact avec l'article manufacturé (W) afin d'imposer une déformation sur celui-ci ;
**caractérisé en ce que** le dispositif de caractérisation (14) comprend un arbre (26) équipé d'au moins un élément de came (28) qui fait fonctionner l'élément de pression (16) en imprimant une oscillation verticale sur celui-ci,
et **en ce que** l'élément de pression (16) est une plaque ayant une extension principale le long de l'axe de table (X).

2. Banc selon la revendication 1, dans lequel l'élément de came (28) est pourvu d'une surface excentrique externe (28a) et l'élément de came (28) est constitué d'un seul tenant avec la partie restante de l'arbre (26).

3. Banc selon l'une quelconque des revendications précédentes, dans lequel au moins deux éléments de came (28) sont prévus, à distance le long de l'axe de rotation (Z) de l'arbre (26).

4. Banc selon l'une quelconque des revendications précédentes, comprenant des éléments de transmission (40), reliés solidement à l'élément de pression (16), chacun étant mis en prise et déplacé en oscillation par l'élément de came (28) relatif, dans lequel lesdits éléments de transmission (40) comprennent des rouleaux en contact avec les éléments de came (28) respectifs.

5. Banc selon l'une quelconque des revendications précédentes, dans lequel l'arbre (26) présente des surfaces de support (30) pour des paliers (32) et les surfaces externes (28a) desdits éléments de came (28) sont abaissées par rapport aux surfaces de support (30) des paliers (32).

6. Banc selon l'une quelconque des revendications précédentes, dans lequel les éléments de came (28) sont remplaçables.

7. Banc selon l'une quelconque des revendications 1 à 4, dans lequel l'élément de came (28) est une forme de cône tronqué, même avec des bases non circulaires.

8. Banc selon la revendication 7, lorsqu'elle dépend de la revendication 4, dans lequel chaque élément de transmission (40) peut être déplacé en translation dans la direction de l'axe de rotation (Z), le long du profil de cône tronqué de l'élément de came (28).

9. Banc selon la revendication 7 ou 8, dans lequel la forme de cône tronqué est définie, le long de l'axe de rotation (Z) de l'arbre (26), par :
- une première section transversale de cône tronqué (281), définie entre le premier profil d'élévation minimale et un premier profil d'élévation maximale ;
- une seconde section transversale de cône tronqué (283), définie entre un second profil d'élévation maximale et un second profil d'élévation minimale.

10. Banc selon la revendication 9, comprenant un premier élément de transmission (40) pouvant se déplacer en translation le long du profil de la première section transversale de cône tronqué (281), et un second élément de transmission (40) pouvant se déplacer en translation le long du profil de la seconde section transversale de cône tronqué (283).

11. Banc selon l'une quelconque des revendications 8 à 10, dans lequel chaque élément de transmission (40) est un rouleau (401) ayant un axe de rotation (Z') incliné par rapport à l'axe de rotation (Z) de l'arbre (26).

12. Banc selon l'une quelconque des revendications 8 à 11, dans lequel chaque élément de transmission (40) est monté sur un support (402) relié à des guides (403) positionnés dans la direction de l'axe (Z), et dans lequel la translation des éléments de transmission (40) est effectuée au moyen d'un système de commande comprenant :
- un arbre de commande (404), dont la rotation détermine un déplacement des supports (402) le long des guides (403) ;
- un arbre vertical (407), équipé d'un volant de manœuvre (408) ;
- un mécanisme de transmission (406), comprenant des roues dentées pour la transmission de mouvement entre l'arbre vertical (407) et l'arbre de commande (404).

13. Banc selon l'une quelconque des revendications 7 à 12, dans lequel le groupe d'entraînement (20) comprend des ressorts en spirale précontraints (50) joints à l'élément de pression (16) pour assurer un contact entre les éléments de transmission (40) et l'élément de came (28) respectif.

14. Banc selon l'une quelconque des revendications 1 à 6, dans lequel le dispositif de caractérisation (14) est remplaçable pour modifier les caractéristiques de la déformation imposée sur l'article manufacturé (W).

15. Banc selon l'une quelconque des revendications 8 à 13, dans lequel le dispositif de caractérisation (14) est réglable pour modifier les caractéristiques de la déformation imposée sur l'article manufacturé (W) au moyen de la translation de l'élément de transmission (40) le long du profil de cône tronqué de l'élément de came (28').
